## Europäisches Patentamt

## European Patent Office

## Office européen des brevets

(11) Publication number: **0 291 070**

**B1**

(12) **EUROPEAN PATENT SPECIFICATION**

(45) Date of publication of patent specification: **06.02.91**

(51) Int. Cl.⁵: **C 04 B 37/02, F 02 F 7/00**

(21) Application number: **88107699.6**

(22) Date of filing: **13.05.88**

(54) Ceramic to metal brazing.

(30) Priority: **13.05.87 US 49092**

(43) Date of publication of application:
**17.11.88 Bulletin 88/46**

(45) Publication of the grant of the patent:
**06.02.91 Bulletin 91/06**

(84) Designated Contracting States:
**DE GB**

(56) References cited:
**EP-A-0 111 989**
**EP-A-0 160 301**
**DE-A-3 510 940**
**GB-A- 811 088**
**GB-A-1 293 116**

(73) Proprietor: **CUMMINS ENGINE COMPANY, INC.**
**500 Jackson Street, Box 3005**
**Columbus, Indiana 47202 (US)**

(72) Inventor: **Napier, Buel D.**
**10120 650 S**
**Columbus Indiana (US)**
Inventor: **Wolter, George W.**
**216 Robinwood Drive**
**Whitehall Michigan (US)**
Inventor: **King, Renita G.**
**117 N.Stilwll Street**
**Brownstown Indiana (US)**

(74) Representative: **von Rohr, Hans Wilhelm, Dipl.-Phys. et al**
**Patentanwälte Gesthuysen & von Rohr**
**Huyssenallee 15 Postfach 10 13 33**
**D-4300 Essen 1 (DE)**

Courier Press, Leamington Spa, England.

## Description

Technical field

The present invention relates generally to the joining of ceramic and metal materials and specifically to a method for simultaneously attaching a ceramic element to a metal element and heat treating the metal element to achieve a desired microstructure and mechanical properities.

Background art

Because of their outstanding wear-resistant characteristics ceramic materials have found increasing application in internal combustion engines and similar environments where continuous contact between engine components occurs during engine operation. Valve actuating mechanisms, in particular, have surfaces which are subject to frequent contact with other engine components. Depending upon the type of engine in which the valve actuating mechanism is located, these contact surfaces may be located on a cross-head assembly, on a tappet or on a rocker arm. Because such surfaces are subjected to a high degree of contact, they should be formed of a material characterized by high abrasion and wear resistance which will not fail during the life of the engine component. Materials having these characteristics are often not suitable for use in forming the entire engine component and, therefore, must be secured in some manner to the engine component to form the contact surface.

Materials which provide a durable abrasion-resistant surface for this purpose are known in the prior art. For example, U.S. Patent No. 4,485,770 to Saka et al. describes such a material. The material disclosed in this reference is an iron-based sintered alloy which is pressed to the desired shape, sintered and then heat treated to produce a pad having a predetermined alloy structure. The pad thus formed must be attached in some manner to the engine component contact surface. The Saka patent, however, is silent on exactly how this is accomplished in a manner which produces a durable, effective abrasion-resistant surface.

An effective wear resisting insert for the cam-contacting surface of an engine tappet formed from a highly wear resistant ceramic material such as silicon carbide is disclosed in U.S. Patent No. 4,366,785 to Goloff et al. The ceramic insert disclosed in this patent is press-fitted into a recess in the tappet rather than permanently bonded or secured to the tappet and, consequently, unless the proper interference is achieved, the ceramic insert will not remain attached to the tappet.

Although ceramic materials are generally preferred over metal alloys for the formation of engine component contact surfaces because of their superior abrasion and wear-resistant characteristics, the attachment of ceramic contact surfaces is more difficult because the engine components to which they are attached are usually formed from metal. The different coefficients of thermal expansion of metals and ceramics causes the metal-to-ceramic joint to be stressed and ultimately results in the separation of the contact surface from the engine component. Methods for creating an effective metal-to-ceramic joint have been disclosed by the prior art. U.S. Patent No. 3,034,205 to Ames is exemplary to these prior art methods. Ames discloses an alloy consisting of copper, silver, indium, nickel and titanium which can be employed to braze a metal, particularly stainless steel, to a ceramic by heating to a temperature of about 982°C (1800°F). to 1204°C (2200°F) for at least five minutes, preferably in an atmosphere of cracked ammonia gas. U.S. Patents Nos. 3,857,663 to Beggs; 3,091,028 to Westbrook et al. and 3,226,822 to Budde et al. also disclose methods of bonding a ceramic and a metal. However, none of the aforementioned patents discloses the formation of a ceramic-to-metal bond which would be likely to withstand the stresses encountered by a contact surface in an engine environment.

The metal engine components which support the above-described contact surfaces are subject to stresses during engine operation and therefore, must themselves be strong, durable and capable of meeting specified mechanical and physical characteristics. Depending upon the material from which these components are formed, such characteristics may be achieved by heat treatment. In the case of a cast iron component, heat treatment followed by cooling will yield the required microstructure and properties. It would be highly desirable and economical to heat treat the metal engine component and attach a wear-resistant ceramic surface element in a minimum number of process steps. U.S. Patent No. 3,615,920, to Talento discloses a combination heat treatment and braze cycle for metal which results in the modification of its microstructure and produces desirable mechanical properties in the metal thus treated. There is, however, no suggestion in this reference that the multi-step method described therein could be applied to metals other than stainless steel or that the braze cycle portion of this method could be employed to attach a ceramic material to the metal.

Consequently, the prior art fails to show a wear-resistant ceramic contact surface element permanently secured by brazing to a metal internal combustion engine component wherein a single process simultaneously brazes the ceramic element to the metal and achieves the desired microstructure and mechanical properties in the metal forming the engine component.

Disclosure of the invention

It is a primary object of the present invention, therefore, to overcome the disadvantages of the prior art discussed above.

It is another object of the present invention to provide a method for bonding a ceramic material to a metal material which simultaneously develops the required microstructure and mechanical properties in the metal.

It is yet another object of the present invention to provide a method for simultaneously brazing a ceramic material to a metal material and austenitizing the metal.

It is a further object of the present invention to provide a method for securely bonding a durable, wear-resistant ceramic element to a metal component of an internal combustion engine wherein the ceramic is brazed to the metal and a normalized microstructure is simultaneously developed in the metal engine component.

It is a still further object to provide a method for simultaneously brazing a ceramic element to a metal internal combustion component and austenitizing the metal component, wherein a metallized ceramic element, a brazing alloy and the metal component are first heated and then gas quenched.

The aforesaid objects are achieved by providing a method for joining a ceramic element to a metal element including the steps of metallizing the ceramic element, applying a brazing alloy to wet the metallized ceramic, subjecting the ceramic element, brazing alloy and metal element to heating in a vacuum furnace and then gas quenching in nitrogen or argon. The resulting composite is characterized by an extremely strong ceramic-to-metal joint and a core hardness in the metal which renders it especially suitable for use in an internal combustion engine environment.

Other objects and advantages will become apparent from the following description, claims and drawings.

Brief description of the drawings

Figure 1 is a fragmentary cross-sectional view of the head portion of an internal combustion engine illustrating two types of contact surfaces found therein; and

Figure 2 is a schematic illustration of a ceramic-metal bond formed according to the present invention.

Best mode for carrying out the invention

An internal combustion engine environment typically includes engine components which make frequent contact during engine operation and, consequently, are extremely susceptible to wear. It is highly desirable, therefore, to form the surfaces of these components from materials which will withstand the constant contact experienced during engine operation without undue wear and abrasion. Engine components which include contact surfaces may be fabricated from metals of different types. For example, rocker arms and crosshead assemblies are usually formed from cast iron, while tappets may be formed from stainless steel. All of these structures generally include at least one surface which is subject to frequent contact during engine operation. Although the present invention is discussed as comprising a part of a crosshead assembly for an internal combustion engine, it can be employed with equally advantageous results wherever the attachment of a wear-resistant ceramic to metal is desired.

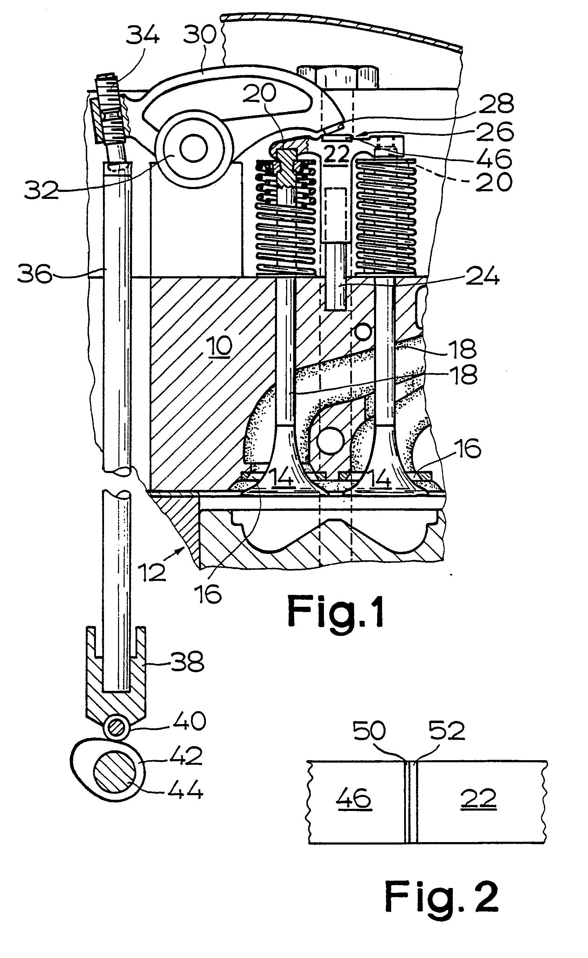

Referring to the drawings, Figure 1 illustrates, in fragmentary cross-section, an internal combustion engine. The method of the present invention is particularly useful in the production of some of these components. The engine depicted in Figure 1 includes a head 10 and an engine block 12. Exhaust poppet valves 14, which open and close exhaust ports 16, include stems 18. The upper ends of stems 18 are received in recesses 20 in a T-shaped crosshead assembly 22. The crosshead assembly 22 may be mounted on the engine head by a guide pin 24.

The crosshead assembly 22 has an abutment surface 26 acted on by a pad 28 on one end of a rocker arm 30. The rocker arm 30 is pivotally mounted on a shaft 32 to pivot between a position where pad 28 fully contacts abutment surface 26 and a position where pad 28 is completely out of contact with surface 26. The opposite end of the rocker arm includes a threaded pin 34 which is received by a push rod 36. The opposite end of the push rod 36 is secured to a tappet 38 including a cam contacting element 40 which rides on the surface of a cam 42 mounted on the engine camshaft 44. The push rod 36 is reciprocated by cam 42 to cause the pad 28 on rocker arm 30 to contact crosshead abutment surface 26 to force valves 14 from a closed to an open position at the correct time and for the proper interval.

During engine operation rocker arm pad 28 will contact crosshead abutment surface 26 thousands of times each minute. The repeated abrading and heat inducing action thus created by pad 28 on surface 26 can lead to significant damage to this surface and, ultimately, the malfunctioning of the crosshead assembly 22 for its intended purposes in opening exhaust valves 14. The present invention, however, provides a solution to this problem. An abrasion and wear resistant pad 46 is provided in the abutment surface 26 of the crosshead assembly 22 at the location where pad 28 of the rocker arm 30 contacts surface 26 during engine operation. In order for pad 46 to function effectively and thus provide the abrasion-resistant surface required to sustain the degree of contact experienced during engine operation, it must be formed of a material which will tolerate these stresses. Additionally, pad 46 must be securely attached to crosshead assembly 22 so that it will remain in place despite being subjected to repeated contact thousands of times each minute.

The pad 46 will preferably be formed of one of several commercially available wear and abrasion resistant ceramics which are capable of withstanding the temperatures typically encountered in an internal combustion engine. Different types of sintered silicon nitride ceramics have been successfully employed and are, therefore preferred for this purpose, although the method of the present invention could be used to secure a pad 46 made of other functionally equivalent ceramic materials.

An internal combustion engine crosshead assembly, such as crosshead assembly 22, is usually formed from cast iron. Consequently, the secure bonding of the ceramic material to pad 46 to the cast iron crosshead assembly 22 must be achieved if the pad is going to be available to function properly. The present invention provides a method whereby a ceramic material may be securely bonded to cast iron so that the resulting structure will remain operative in an internal combustion engine environment for an extended period. The method of the present invention, moreover, in addition to securely bonding a ceramic pad, like pad 46, to a cast iron engine component, like crosshead assembly 22, simultaneously results in a normalized microstructure in the cast iron so that required mechanical properties are achieved in the cast iron component.

The silicon nitride or equivalent ceramic material employed to form the pad 46 is preferably cleaned and then metallized to improve the wettability of the ceramic and, thus, the adherence of the ceramic to the brazing alloy chosen to form the ceramic-to-metal bond. The metallization of the ceramic functions as a surface preparation step and may be accomplished by one of a variety of known techniques for metallizing a ceramic. Such techniques include sintered metal powder processes, reactive- or refractory-metal salt coating processes, and vapor deposition processes. A piece of metallized ceramic may be cut to form pad 46 or a piece of ceramic pre-cut to the required shape and size may be metallized as required.

A suitable brazing alloy is required to "wet" the surface of the metallized ceramic to promote the formation of a strong, secure ceramic-to-metal bond. An alloy consisting of titanium, copper and silver functions effectively to bond a silicon nitride ceramic to cast iron. However, other, equivalent brazing alloys having suitable melting ranges and wetting characteristics could be employed with similar results. The exact brazing alloy selected will depend upon the specific ceramic to be bonded.

Figure 2 illustrates schematically the bonding of ceramic pad 46 to cast iron crosshead assembly 22 according to the present invention. Strip 50 represents a metallized layer applied to the surface of the ceramic, and strip 52 represents the titanium, copper, silver (TiCuAg) or equivalent brazing alloy used to braze the ceramic to the cast iron and form the strong ceramic-to-metal bond achieved by the present process.

To achieve the particularly secure, stable ceramic-to-metal joint represented by Figure 2 and simultaneously normalize the metallic microstructure of the cast iron crosshead assembly 22, a composite structure like that shown in Figure 2 comprising a metallized ceramic pad 46 which has been wet with a brazing alloy 52 and applied to a cast iron crosshead assembly 22 is subjected to a temperature of about 1145K (1600°F) to about 1228K (1750°F.) in a vacuum furnace. It is possible to achieve a normalized microstructure in cast iron by holding the iron at a temperature of 1145K (1600°F.) to 1228K (1750°F.) for at least two hours and quenching. However, it has been discovered that brazing of the ceramic pad 46 to the iron crosshead assembly 22 and austenitization of the cast iron element may be achieved simultaneously by subjecting the composite to the 1145K (1600°F.) to 1228K (1750°F.) temperature in a vacuum for about one hour. The joining of the ceramic to the metal by the brazing alloy is completed within this time period under these conditions. In addition, a matrix structure is developed in the cast iron upon quenching which ranges from acicular to extremely fine pearlite with small amounts of free ferrite, depending upon the thickness of the section examined, hardenability of the cast iron and quench rate.

Following the formation of the ceramic-to-metal bond and the development of the austenitized microstructure in the cast iron, the composite is subjected to gas quenching in a nitrogen or argon environment. Gas quenching under these conditions permits cooling from the brazing/austenitizing temperature at a controlled rate, thus attaining the described structural properties in the metal and resulting in the required mechanical properties in the cast iron crosshead. For example, a core hardness of 26 to 31 RC may be achieved in cast iron subjected to the method of the present invention. Since internal combustion engine manufacturers typically specify cast iron components having a lower core hardness, crosshead assemblies having ceramic pads bonded thereto in accordance with the present method will generally exceed manufacturers' specifications. The result is accomplished in a single processing step instead of the multiple steps previously required.

The present method, moreover, produces an extremely strong ceramic-to-metal joint. Tests conducted on the composite of Figure 2 wherein these composites were subjected to high torque forces demonstrated that the ceramic pad 46 fractures before the ceramic-to-metal braze joint separates or breaks. Consequently, the method of the present invention can be used effectively to produce a ceramic-to-metal joint capable of withstanding stresses of the degree and duration typically encountered in an internal combustion engine.

While the ceramic-to-metal brazing method of the present invention has been described specifically with reference to the bonding of a ceramic pad 46 to a cast iron crosshead assembly 22 in an internal combustion engine, there are other engine components which could be formed according to this method. For example, the cam contacting member 40 of tappet 38 could be provided with a ceramic surface (not shown) according to the present invention. Similarly, any metal (preferably cast iron) engine component subject to repeated contact could be provided with a durable, wear-resistant surface while simultaneously enhancing the mechanical properties of the metal to which the ceramic was bonded.

Industrial applicability

The method of the present invention will find its primary application in the production of internal combustion engine components where it is desired to bond a ceramic component to a metal, preferably a cast iron, component and wherever it is desired simultaneously to form an extremely strong ceramic-to-metal bond and to obtain a metal component characterized by enhanced mechanical properties with a single heat treatment.

## Claims

1. Method for forming an assembly for an internal combustion engine, said assembly having a ceramic component, preferably a silicon nitride component, and a metal component, including the steps of

a) metallizing at least a portion of the surface of the ceramic component,

b) applying a suitable alloy to the metallized surface of the ceramic component,

c) applying the metal component to the portion of ceramic component containing the alloy to form the assembly, and

d) heating the assembly thus formed to braze said ceramic to said metal,

characterized in that in step d) heating is done in a vacuum to a temperature within the range of 1.600°F (approximately 1.145K) to 1.750°F (approximately 1.228K) for about one hour to austenitize the microstructure of said metal simultaneously with said brazing, and step d) is followed by further step

e) gas quenching the heated assembly to cool said assembly at a controlled rate and normalize the microstructure of said metal.

2. Method according to claim 1, characterized in that said metal component is a cast iron component.

3. Method according to claim 1, or, in particular, according to claim 2, characterized in that said alloy consists essentially of titanium, copper and silver.

4. Method according to claim 1, 2 or 3, in particular according to claim 2, characterized in that said quenching gas is nitrogen or argon.

## Patentansprüche

1. Verfahren zur Herstellung einer Anordnung für einen Verbrennungsmotor, wobei die Anordnung einen keramischen Teil, vorzugsweise aus Siliziumnitrid, und einen metallischen Teil aufweist, mit den Schritten

a) Metallisieren wenigstens eines Teils der Oberfläche des keramischen Teils,

b) Aufbringen einer geeigneten Legierung auf die metallisierte Oberfläche des keramischen Teils,

c) Anfügen des metallischen Teils an den Abschnitt des keramischen Teils, der die Legierung aufweist, um so die Anordnung zu bilden, und

d) Erwärmen der so gebildeten Anordnung, um den keramischen Teil mit dem metallischen Teil durch Hartlöten zu verbinden,

dadurch gekennzeichnet, daß das Erwärmen in Schritt d) im Vakuum bis zu einer Temperatur in einem Bereich von 1.600°F (ungefähr 1.145 K) bis 1.750°F (ungefähr 1.228 K) während etwa einer Stunde durchgeführt wird, um die Mikrostructur des metallischen Teils während der Hartverlötung zu austenitisieren, und

daß auf Schritt d) ein weiterer Schritt folgt, nämlich

e) Abschrecken der erwärmten Anordnung mittels eines Gases um die Anordnung mit einer kontrollierten Geschwindigkeit abzukühlen und die Mikrostruktur des metallischen Teils zu normalisieren.

2. Verfahren nach Anspruch 1, dadurch gekennzeichnet, daß das metallische Teil aus Gußeisen besteht.

3. Verfahren nach Anspruch 1 oder im besonderen nach Anspruch 2, dadurch gekennzeichnet, daß die Legierung im wesentlichen aus Titan, Kupfer und Silber besteht.

4. Verfahren nach Anspruch 1, 2 oder 3, im besonderen nach Anspruch 2, dadurch gekennzeichnet, daß das zur Abschreckung dienende Gas Stickstoff oder Argon ist.

## Revendications

1. Procédé de fabrication d'un ensemble pour une machine à combustion interne, ledit ensemble ayant un composant céramique de préférence un composant consistant en nitrure de silicium, et un composant métallique, contenant les mesures suivantes:

a) Métallisation au moins d'une partie de la surface du composant céramique;

b) application d'un alliage convenable à la surface métallisé du composant céramique;

c) application du composant métallique à la partie du composant céramique contenant l'alliage pour former l'ensemble et

d) échauffement d'ensemble formé de cette manière pour braser ladite céramique audit métall,

caractérisé en ce que l'échauffement selon la mesure d) est effectué dans un vacuum à une température, qui est dans la gamme entre 1.600°F (approximatif 1.145 K) et 1.750°F (approximatif 1.228 K) pour environ une heure pour austéniser la microstructure dudit métall simultanément avec ledit recuit de détensionnement, et la mesure d) est suivie par la mesure ultérieure

e) refroidissement brusque d'ensemble échauffé par un gaz pour refroidir ledit ensemble d'une manière contrôlée et pour normaliser la microstructure dudit métall.

2. Méthode suivant la revendication 1, caractérisée en ce que ledit composant métallique est un composant consistant en fonte de fer.

3. Méthode suivant la revendication 1, ou en particulier suivant la revendication 2, caractérisée en ce que ledit alliage consiste essentiellement en titan, cuivre et argent.

4. Méthode suivant la revendication 1, 2 ou 3, en particulier suivant la revendication 2, caractérisée en ce que ledit gaz pour refroidissement brusque est nitrogène ou argon.

Fig.1

Fig. 2